Europäisches Patentamt

European Patent Office

Office européen des brevets

(19)

(11) Veröffentlichungsnummer: **0 236 706**
**B1**

(12) EUROPÄISCHE PATENTSCHRIFT

(45) Veröffentlichungstag der Patentschrift:
28.11.90

(51) Int. Cl.⁵: **B60B 21/10,** B60C 15/02

(21) Anmeldenummer: **87100902.3**

(22) Anmeldetag: **23.01.87**

(54) **Füllring für ein Fahrzeugrad.**

(30) Priorität: **14.03.86 DE 8607101 U**

(43) Veröffentlichungstag der Anmeldung:
**16.09.87 Patentblatt 87/38**

(45) Bekanntmachung des Hinweises auf die Patenterteilung:
**28.11.90 Patentblatt 90/48**

(84) Benannte Vertragsstaaten:
**AT BE CH DE ES FR GB GR IT LI LU NL SE**

(56) Entgegenhaltungen:
**EP-A- 0 079 454**
**EP-A- 0 139 905**
**DE-A- 3 246 131**
**DE-A- 3 312 482**
**DE-A- 3 608 584**
**US-A- 1 903 575**

(73) Patentinhaber: **Continental Aktiengesellschaft,**
**Königsworther Platz 1, D-3000 Hannover 1(DE)**

(72) Erfinder: **Duchow, Alfred, Am Pfannteich 9,**
**D-3156 Hohenhameln(DE)**
Erfinder: **Haack, Dietmar, Carl-Diem-Strasse 6,**
**D-3257 Springe 2(DE)**
Erfinder: **Frerichs, Udo, Buchenweg 7,**
**D-3012 Langenhagen 8(DE)**
Erfinder: **Flebbe, Werner, Albert-Schweitzer-Strasse 52,**
**D-3057 Neustadt a. Rbge. 1(DE)**
Erfinder: **Rach, Heinz-Dieter, Planetenring 32,**
**D-3008 Garbsen 1(DE)**

## Beschreibung

Die Erfindung betrifft einen aus Gummi oder Kunststoff bestehenden Füllring für ein luftbereiftes Fahrzeugrad, bei dem der Reifen mit seinen Wülsten am radial inneren Umfang einer Felge neben sich im wesentlichen nach radial innen erstreckenden Felgenhörnern befestigt ist, wobei der Füllring zur Abdeckung des Raumes axial innen von den Reifenwülsten dient und mehrere umlaufende Hohlkammern aufweist.

Ein solcher Füllring wird z. B. in der DE-OS 3312482 und in der DE-OS 3331870 beschrieben. Die bekannten Füllringe dienen primär dazu, den Einbauraum axial innen von den Reifenwülsten derart vollständig und wasserdicht auszufüllen, daß kein Schmutz- und Spritzwasser in diesen Raum eindringen kann, weil es andernfalls durch die Reifenwülste daran gehindert wäre, anschließend nach seitlich außen abzufließen. Man ist aus Fertigungsgründen bestrebt, die Füllringe aus einem Teil herzustellen, z. B. durch Extrudieren von Endlosprofilen und anschließendes Ablängen. Dabei wurde bisher in Kauf genommen, daß die Ringe nicht unerhebliche Montageschwierigkeiten verursachten.

Der Erfindung liegt deshalb die Aufgabe zugrunde, die bekannten Füllringe dahingehend zu optimieren, daß ein einfacherer Einbau in das Fahrzeugrad möglich wird.

Diese Aufgabe wird neuerungsgemäß dadurch gelöst, daß die Holhkammern in radialer Richtung in zumindest zwei Ebenen verlaufen und daß in jeder Ebene in axialer Richtung zumindest zwei Hohlkammern angeordnet sind.

Die Erfindung bietet den Vorteil,daß trotz einer größeren Nachgiebigkeit der Füllringwand die Dichtwirkung vor allem am radial und axial inneren Anlagebereich des Füllrings an der Tiefbettwand des Felgenkranzes verbessert wird. Durch eine Optimierung der Querschnittskontur des Füllrings hat man erreicht, daß selbst bei geringfügigen Bewegungen des Reifenwulstes in extremen Fahrsituationen der Füllring nicht an einzelnen Stellen nach radial innen hin ausbricht und seine Dichtwirkung voll erhalten wird.

Nachfolgend werden mehrere Beispiele des neuerungsgemäßen Füllrings anhand einer Zeichnung näher erläutert. Es zeigt:

Fig. 1 einen Füllring mit sechs umlaufenden Hohlkammern in zwei Ebenen in einer perspektivischen Teilansicht,

Fig. 2 einen Füllring mit sechs umlaufenden Hohlkammern in drei Ebenen in einem radialen Teilschnitt,

Fig. 3 ein Fahrzeugrad mit einem eingebauten Füllring in einem radialen Teilschnitt.

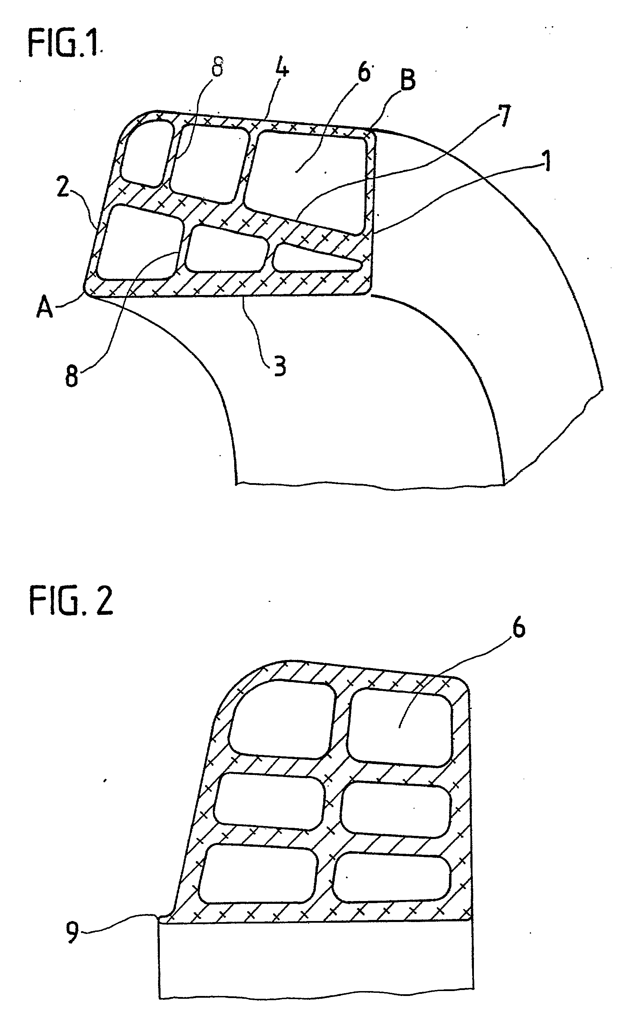

Der in Fig. 1 dargestellte Füllring weist eine zu seiner Drehachse vertikal verlaufende Seitenwand 1 auf, die nach der Montage an einem Reifenwulst anliegt. Die gegenüberliegende Seitenwand 2 ist mit etwa 10° gegenüber der Vertikalen geneigt, entsprechend der Neigung der Wand einer Tiefbettfelge.

Die radial innere Wand 3 des Füllrings verläuft im wesentlichen parallel zur Drehachse, Während die radial äußere Wand 4 geneigt verläuft, so daß sie in dem dem Felgentiefbett zugewandten Bereich den größten Füllringdurchmesser bildet. Die umlaufenden Hohlkammern 6 sind in zwei Ebenen angeordnet, wobei die beiden Ebenen durch eine Innenwand 7 voneinander getrennt werden. Die Innenwand 7 steigt von axial außen nach axial innen hin an und trifft in der radial äußeren Hälfte auf die Seitenwand 2.

Die in jeder der beiden Ebenen befindlichen drei Hohlkammern 6 werden durch schmale Zwischenwände 8 voneinander getrennt, wobei die Zwischenwände 8 in den beiden Ebenen versetzt zueinander verlaufen. Die in der radial inneren Ebene befindlichen drei Hohlkammern 6 weisen etwa eine gleiche axiale Erstreckung auf, während die axiale Erstreckung der drei Hohlkammern 6 in der radial äußeren Ebene von axial außen nach axial innen hin abnimmt.

Der in Fig. 1 dargestellte Füllring ist zum Zwecke eines einfacheren Einbaues nach der Methode der finiten Elemente optimiert worden, wobei es darauf ankam, die mit A und B bezeichneten Stellen weicher zu gestalten als die anderen beiden Kanten. Dies hat man außer mit der in Fig. 1 dargestellten Querschnittskontur vor allem dadurch erreicht, daß die Außenwände 1, 2 und 4 sowie die Zwischenwände 8 sehr dünn ausgebildet werden (Dicke ca. 1 mm), während die Wände 3 und 7 eine Dicke von ca. 3 mm aufweisen sollten, jedoch mit der Ausnahme, daß die Wand 3 auf der Länge der axial und radial innen befindlichen Hohlkammer 6 eine Dicke von ca 2 mm aufweisen sollte.

Der Füllring der Fig. 2 unterscheidet sich von dem der Fig. 1 vor allem dadurch, daß insgesamt sechs umlaufende Hohlkammern 6 in radialer Richtung in drei Ebenen angeordnet sind, so daß sich in jeder Ebene zwei Hohlkammern nebeneinander befinden. Die Wandstärken der Außen- und Innenwände sind in diesem Beispiel etwa gleichstark gewählt. Der Füllring ist für den Einsatz bei Tiefbettfelgen mit relativ großer Tiefbetttiefe vorgesehen. Als Besonderheit ist eine Nase 9 zu erwähnen, die sich auf der radial und axial inneren Seite des Füllrings befindet und die den Übergangsbereich von der seitlichen Tiefbettwand zum Tiefbettboden der zugehörigen Felge umschließt.

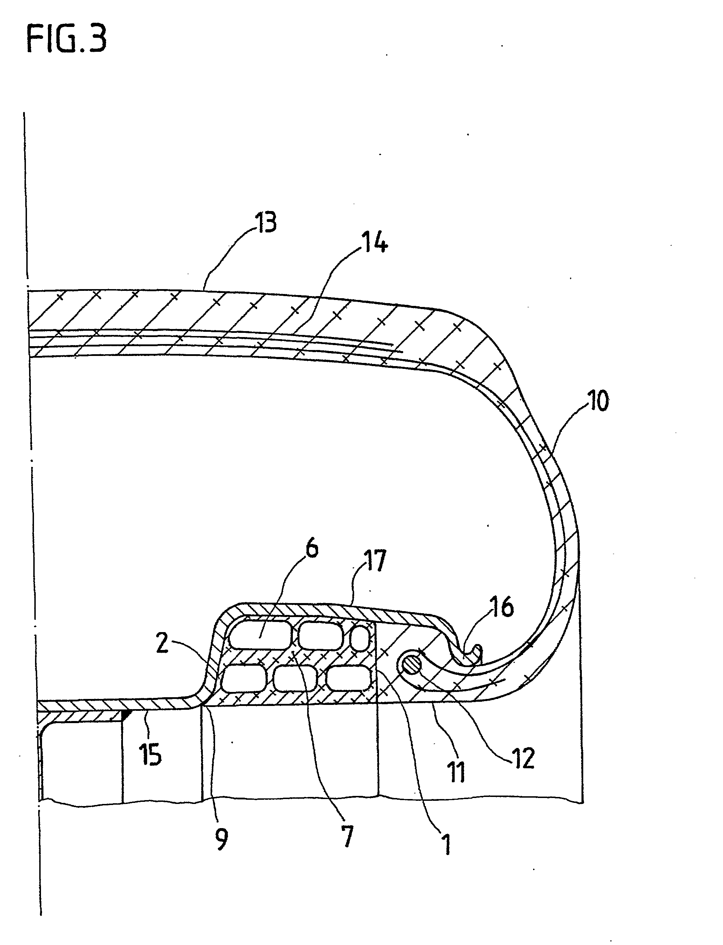

Fig. 3 zeigt in einem radialen Teilschnitt ein Fahrzeugrad, bei dem ein weiterer Füllring montiert ist. Bei einem aus Gummi oder gummiähnlichen Kunststoffen bestehenden Fahrzeugluftreifen ist eine Karkasse 10 in den Wülsten 11 durch Umschlingen von zug- und druckfesten Wulstkernen 12 verankert, während sich zwischen dem Laufstreifen 13 und der Karkasse 10 ein üblicher Verstärkungsgürtel 14 befindet. Die Reifenwülste 11 sind am radial inneren Umfang einer Tiefbettfelge 15 neben sich im wesentlichen nach radial innen erstreckenden Felgenhörnern 16 angeordnet. Die sich axial innen an die Felgenhörner 16 anschließenden Bereiche 17 der Felge 15 dienen als Pannenlaufstützflächen zur Abstützung des Reifens im Defektfall. Der Bereich 17 der Felge 15 verläuft in Querrichtung geneigt, so daß auf der radial inneren Seite neben den Reifenwülsten 11 ein Montagehochbett für den Reifen gebildet wird.

Nach der Montage des Reifens auf die Einteilige Felge 15 wird der Raum neben den Reifenwülsten 11, der das Montagehochbett umfaßt, mit einem Füllring der beschriebenen Art verschlossen, so daß kein Schmutz- und Spritzwasser in diesen Raum eindringen kann.

Im Beispiel der Fig. 3 weist der Füllring insgesamt sechs umlaufende Hohlkammern 6 auf, die in radialer Richtung in zwei Ebenen zu je drei Kammern angeordnet sind. Im Unterschied zum Beispiel der Fig. 1 verläuft die Innenwand 7, die die Hohlkammern der beiden Ebenen voneinander trennt, etwa parallel zur Drehachse des Füllrings. Auch der Füllring der Fig. 3 weist axial innen eine umlaufende Nase 9 auf.

Die vorstehend beschriebenen Füllrings sind bevorzugt aus einem Gummi hergestellt, desssen Shore-Härte A zwischen 80 und 90 und dessen Bruchdehnung mehr als 250 % beträgt (DIN 53504). Die Materialdichte sollte etwa 1,40 g / ccm betragen.

## Patentansprüche

1. Aus Gummi oder Kunststoff bestehender Füllring für ein luftbereiftes Fahrzeugrad, bei dem der Reifen mit seinen Wülsten (11) am radial inneren Umfang einer Felge (15) neben sich im wesentlichen nach radial innen erstreckenden Felgenhörnern (16) befestigt ist, wobei der Füllring zur Abdeckung des Raumes axial innen von den Reifenwülsten dient und mehrere umlaufende Hohlkammern (6) aufweist, dadurch gekennzeichnet, daß die Hohlkammern (6) in radialer Richtung in zumindest zwei Ebenen verlaufen und daß in jeder Ebene in axialer Richtung zumindest zwei Hohlkammern (6) angeordnet sind.

2. Füllring nach Anspruch 1, dadurch gekennzeichnet, daß die Hohlkammern (6) in radialer Richtung in zwei Ebenen angeordnet sind und daß sich in jeder Ebene drei Hohlkammern (6) nebeneinander befinden.

3. Füllring nach Anspruch 1 oder 2, dadurch gekennzeichnet, daß die am Reifenwulst (11) anliegende Seitenwand (1) senkrecht zur Drehachse des Füllrings und die gegenüberliegende Seitenwand (2) um etwa 80° geneigt zur Drehachse verläuft und daß die radial innere Wand (3) eine größere Wandstärke aufweist als die übrigen drei Außenwände (1, 2, 4).

4. Füllring nach Anspruch 1, 2 oder 3, dadurch gekennzeichnet, daß die Innenwand (7), die die in den beiden Ebenen befindlichen Hohlkammern (6) voneinander trennt, von axial außen nach axial innen hin ansteigt und daß die Wanddicke etwa der der radial inneren Außenwand (3) entspricht.

5. Füllring nach Anspruch 1, 2 oder 3, dadurch gekennzeichnet, daß die Zwischenwände (8), die die drei Hohlkammern einer jeden Ebene voneinander trennen, in den beiden Ebenen versetzt zueinander verlaufen und daß ihre Dicke etwa der der seitlichen Außenwände (1, 2) entspricht.

6. Füllring nach Anspruch 1, dadurch gekennzeichnet, daß er gegenüber äußeren Druckkräften an der radial und axial inneren Kante (A) und an der diagonal gegenüberliegenden (B) nachgiebiger ist als an den beiden übrigen.

7. Füllring nach Anspruch 1, dadurch gekennzeichnet, daß er aus einem Gummi mit einer Shore-Härte A von 80 bis 90 und einer Bruchdehnung von mehr als 250 % besteht.

8. Füllring nach Anspruch 2, dadurch gekennzeichnet, daß die Innenwand (7), die die Hohlkammern (6) der beiden Ebenen voneinander trennt, etwa parallel zur radial inneren Außenwand verläuft.

9. Füllring nach Anspruch 1, dadurch gekennzeichnet, daß die Hohlkammern (6) in radialer Richtung in drei Ebenen angeordnet sind und daß sich in jeder Ebene zwei Hohlkammern nebeneinander befinden.

10. Füllring nach Anspruch 1, dadurch gekennzeichnet, daß er radial und axial innen eine umlaufende Nase (9) aufweist.

## Claims

1. Filler ring, formed from rubber or plastics material, for a vehicle wheel fitted with a pneumatic tyre, wherein the tyre is mounted with its beads (11) on the radially inner circumference of a rim (15) adjacent substantially radially inwardly extending rim flanges (16), the filler ring serving to cover the space axially internally of the tyre beads and having a plurality of circumferential hollow chambers (6), characterised in that the hollow chambers (6) extends in a radial direction in at least two planes, and in that at least two hollow chambers (6) are disposed in each plane and extend in an axial direction.

2. Filler ring according to claim 1, characterised in that the hollow chambers (6) are disposed in a radial direction in two planes, and in that three hollow chambers (6) are situated adjacent one another in each plane.

3. Filler ring according to claim 1 or 2, characterised in that the lateral wall (1), which abuts against the tyre bead (11), extends perpendicularly relative to the axis of rotation of the filler ring, and the opposite lateral wall (2) extends at an incline of approximately 80° relative to the axis of rotation, and in that the radially inner wall (3) has a greater wall thickness than the other three external walls (1, 2, 4).

4. Filler ring according to claim 1, 2 or 3, characterised in that the internal wall (7) separates the hollow chambers (6) from one another, which chambers are situated in the two planes, and rises from axially externally to axially internally, and in that the wall thickness corresponds substantially to that of the radially inner external wall (3).

5. Filler ring according to claim 1, 2 or 3, characterised in that the intermediate walls (8) separate the three hollow chambers of each plane from one another and extends in the two planes so as to be offset from one another, and in that their thickness corresponds substantially to that of the lateral external walls (1, 2).

6. Filler ring according to claim 1, characterised in that it is more resilient to external pressure forces at the radially and axially inner edge (A) and at the diagonally opposite edge (B) than at the other two edges.

7. Filler ring according to claim 1, characterised in that it is formed from a rubber having a Shore A hardness of 80 to 90 and a breaking elongation of more than 250%.

8. Filler ring according to claim 2, characterised in that the internal wall (7), which separates the hollow chambers (6) of the two planes from one another, extends substantially parallel to the radially inner external wall.

9. Filler ring according to claim 1, characterised in that the hollow chambers (6) are disposed in a radial direction in three planes, and in that two hollow chambers are situated adjacent each other in each plane.

10. Filler ring according to claim 1, characterised in that it has a circumferential projection member (9) radially and axially internally.

## Revendications

1. Anneau de remplissage constitué de caoutchouc ou de plastique pour une roue de véhicule à pneu sans chambre, dans le cas de laquelle le pneu est fixé, par ses bourrelets (11), contre la périphérie radialement intérieure d'une jante (15), à côté des bords rabattus (16) de la jante qui s'étendent essentiellement radialement vers l'intérieur, étant précisé que l'anneau de remplissage sert à remplir l'espace situé axialement à l'intérieur des bourrelets du pneu et présente plusieurs chambres creuses périphériques (6) caractérisé par le fait que les chambres creuses (6) sont situées en direction radiale, dans au moins deux plans et par le fait que dans chaque plan, en direction axiale, sont disposées au moins deux chambres creuses (6).

2. Anneau de remplissage selon la revendication 1, caractérisé par le fait que les chambres creuses (6) sont disposées en direction radiale dans deux plans et par le fait que dans chaque plan trois chambres creuses (6) se trouvent les unes à côté des autres.

3. Anneau de remplissage selon la revendication 1 ou la revendication 2, caractérisé par le fait que la paroi latérale (1) appliquée contre le bourrelet (11) du pneu est orientée perpendiculairement à l'axe de rotation de l'anneau de remplissage et que la paroi latérale opposée (2) est inclinée d'environ 80° par rapport à l'axe de rotation et par le fait que la paroi (3) radialement intérieure présente une épaisseur de paroi supérieure à celle des trois autres parois extérieures (1, 2, 4).

4. Anneau de remplissage selon la revendication 1, 2 ou 3, caractérisé par le fait que la paroi intérieure (7), qui sépare l'une de l'autre les chambres creuses (6) qui se trouvent dans les deux plans, va en montant, depuis l'extérieur vers l'intérieur, dans la direction axiale, et par le fait que l'épaisseur de paroi correspond à peu près à celle de la paroi extérieure (3) radialement intérieure.

5. Anneau de remplissage selon la revendication 1, 2 ou 3, caractérisé par le fait que les parois intermédiaires (8), qui séparent l'une de l'autre les trois chambres creuses de chaque plan, sont décalées les unes par rapport aux autres dans les deux plans et que leur épaisseur correspond à peu près à celle des parois extérieures latérales (1, 2).

6. Anneau de remplissage selon la revendication 1, caractérisé par le fait qu'il cède plus facilement aux forces de compression extérieures sur l'arête (A) radialement et axialement intérieure et sur l'arête (B) diagonalement opposée que sur les deux autres.

7. Anneau de remplissage selon la revendication 1, caractérisé par le fait qu'il est constitué d'un caoutchouc d'une dureté Shore A allant de 80 à 90 et d'un allongement à la rupture de plus de 250%.

8. Anneau de remplissage selon la revendication 2, caractérisé par le fait que la paroi intérieure (7) qui sépare les unes des autres les chambres creuses (6) des deux plans est dirigée à peu près parallèlement à la paroi extérieure radialement intérieure.

9. Anneau de remplissage selon la revendication 1, caractérisé par le fait que les chambres creuses (6) sont disposées, en direction radiale, en trois plans et par le fait que dans chaque plan deux chambres creuses se trouvent l'une à côté de l'autre.

10. Anneau, de remplissage selon la revendication 1, caractérisé par le fait qu'il présente un talon périphérique (9) radialement et axialement intérieur.

FIG.1

FIG. 2

FIG.3